# FASCICULE DE BREVET EUROPEEN

(11) **EP 0 753 694 B1**
(45) Date de publication et mention de la délivrance du brevet: **12.01.2000**
(21) Numéro de dépôt: 96810428.1
(22) Date de dépôt: 27.06.1996
(51) Int. Cl.: F16K 31/02, F42B 3/00

(54) **Vanne pyrotechnique à commande électrique**
Elektrisches sprengladungbetätiges Ventil
Electric actuated pyrotechnical valve

(30) Priorité: 14.07.1995 CH 207995
(43) Date de publication de la demande: 15.01.1997
(73) Titulaire: PARKER LUCIFER SA, 1227 Carouge (Genève) (CH)
(72) Inventeur: Ramillon, Jean-Pierre, 1258 Perly (CH); Zuccone, Louis, 1213 Onex (CH)
(74) Mandataire: Meylan, Robert Maurice

(56) Documents cités:
- FR-A- 2 644 869
- US-A- 2 020 833
- US-A- 3 017 894
- US-A- 3 141 470
- US-A- 3 473 543

## Description

La présente invention a pour objet une vanne équipée de moyens d'actionnement constitués d'une cartouche explosive mise à feu électriquement.

L'actionnement d'une vanne par une cartouche explosive permet d'assurer l'ouverture ou la fermeture instantanée de la vanne, avec un temps de réponse qu'il est pratiquement impossible d'obtenir au moyen d'un électroaimant.

Une vanne à cartouche explosive est connue du document US-A-3,473,543. Dans cette vanne, les gaz de l'explosion agissent directement sur un obturateur cylindrique sans ressort, engagé à force dans un alésage. Cette vanne n'est pas réutilisable.

Du document US-A-3,141,470 on connaît une vanne à cartouche explosive dans laquelle la cartouche est munie d'un piston relié à une paroi d'obturation séparant l'entrée et la sortie de la vanne, l'explosion ayant pour effet d'arracher cette paroi. Une telle vanne n'est pas réutilisable.

Du document US 3,017,894 on connaît une vanne à cartouche explosive dans laquelle les gaz d'explosion agissent sur un piston auxiliaire libérant un obturateur par le déchirement d'une zone amincie, sous la pression d'un fluide contenu dans un réservoir. Cette vanne n'est pas non plus réutilisable.

L'invention a pour but de réaliser une vanne à cartouche explosive réutilisable, de construction simple, s'inspirant des vannes à actionnement électromagnétique.

La vanne selon l'invention est définie à la revendication 1.

La cartouche étant fermée de manière étanche après l'explosion, le clapet est maintenu actionné, contre la pression d'un fort ressort, par le piston de la cartouche explosive, ce qui permet de réaliser une vanne très simple reprenant les composants de base d'une vanne électromagnétique.

Compte tenu de la force exercée par l'explosion, le ressort peut être largement dimensionné, ce qui assure une bonne fermeture de la vanne au repos.

La vanne peut être une vanne à deux ou trois voies ou davantage. La vanne peut être équipée de plusieurs cartouches explosives.

Le dessin annexé représente, à titre d'exemple, une forme d'exécution de la vanne selon l'invention.

La figure 1 est une vue en coupe axiale d'une vanne à deux voies en position fermée.

La figure 2 représente la même vanne en position ouverte, après explosion de la cartouche.

La vanne représentée comprend un corps de vanne 1 présentant une entrée 2 et une sortie 3 alignées entre elles et un siège de clapet 4, un couvercle 5 fixé sur le corps 1 au moyen de quatre vis 6 avec interposition d'une garniture d'étanchéité 7, un clapet 8 formé à mi-hauteur d'une tige de clapet 9 pour le guidage du clapet, un ressort 10 travaillant en compression entre le couvercle 5 et le clapet 8 pour maintenir ce clapet appliqué sur son siège 4, une douille en acier 11 vissée dans un orifice du corps de vanne 1 coaxialement à l'axe du clapet 8 et une cartouche explosive 12 constituée d'une douille fermée par une tête hexagonale 12a et présentant une partie filetée 12b permettant de visser la cartouche explosive 12 dans la douille 11. La douille 11 présente à son extrémité intérieure un rétrécissement 11a servant au guidage de la tige 9 du clapet. Des garnitures d'étanchéité 13 et 14 assurent respectivement l'étanchéité entre la douille 11 et le corps de vanne et entre la cartouche explosive 12 et la douille 11. De la cartouche explosive 12 partent deux conducteurs isolés 15 et 16.

La cartouche 12 contient un piston 17 en acier auquel est associé un cylindre de matière plastique 18. La tige du piston 17 est guidée par un rétrécissement de la cartouche. L'explosif 19 est mis à feu par l'échauffement d'un filament 20 relié aux conducteurs 15 et 16.

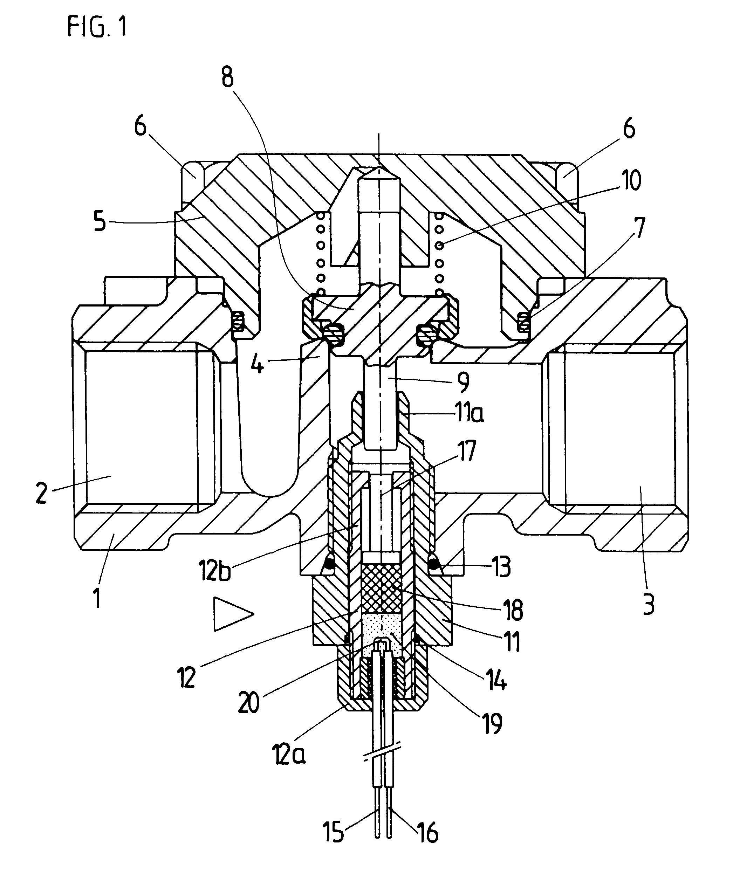

Avant l'explosion de la cartouche, la vanne est fermée comme représentée à la figure 1. Le clapet 8 est appliqué fortement contre son siège 4 par son ressort 10 qui peut être très largement dimensionné.

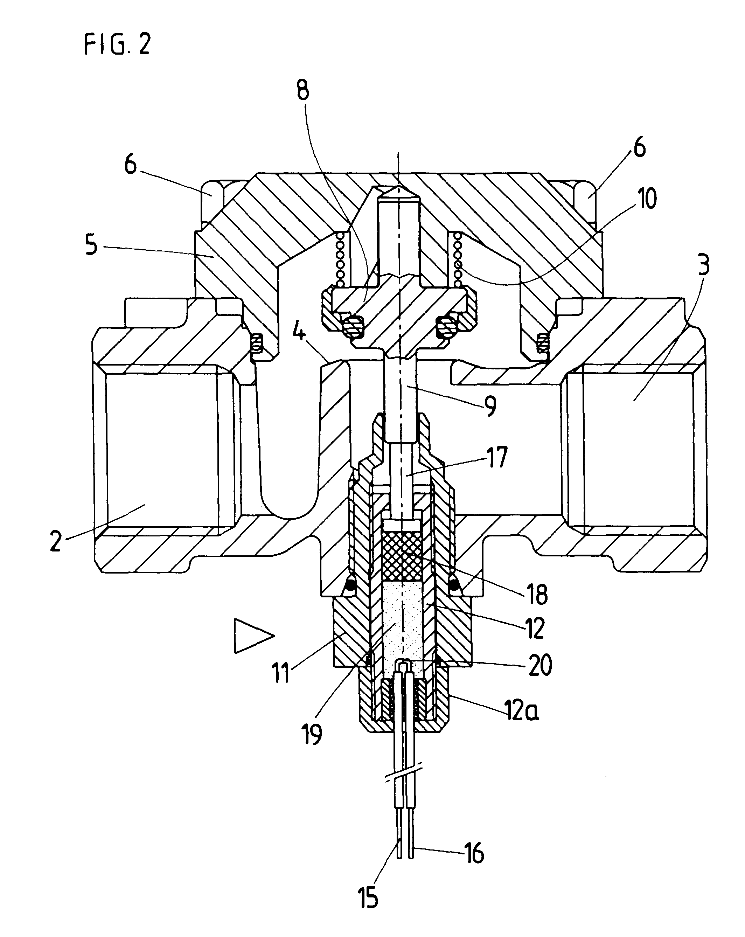

Sous l'effet de l'explosion, le piston 17 est poussé instantanément en avant et vient ouvrir le clapet 8 en le repoussant par l'extrémité de sa tige 9. Le cylindre 18 en matière plastique, très fortement pressé contre la paroi de la cartouche, assure une fermeture hermétique de la cartouche. La pression des gaz d'explosion dans la cartouche est ainsi maintenue et le piston 17 reste dans la position représentée à la figure 2, en butée contre le couvercle 5, en maintenant la vanne ouverte.

On constate que la vanne est de conception très simple. Pour réarmer la vanne, il suffit de dévisser la cartouche 12 et de la remplacer par une nouvelle cartouche.

La vanne pourrait bien entendu être commandée à la fermeture. L'actionnement par cartouche explosive est applicable à tout type de vanne, à tout fluide et pour toute pression.

## Revendications

1. Vanne équipée de moyens d'actionnement constitués d'une cartouche explosive (12) mise à feu électriquement, caractérisée en ce qu'elle comprend un clapet (8 maintenu dans une position initiale par un moyen élastique (10), en ce que la cartouche explosive (12) est munie d'un piston (17, 18) actionnant directement le clapet, et en ce que le piston (17, 18) assure une fermeture étanche de la cartouche (12), de telle sorte que le piston est maintenu en position d'actionnement après explosion, contre l'action dudit moyen élastique (10).

## Patentansprüche

1. Ventil mit Betätigungsmitteln, welche aus einer Sprengpatrone (12) bestehen, die elektrisch gezündet werden kann, dadurch gekennzeichnet, dass das Ventil eine Klappe (8) aufweist, die in ihrer Anfangsstellung durch elastische Mittel (10) gehalten wird, dass die Sprengpatrone (12) mit einem Kolben (18) versehen ist, der die Klappe direkt betätigt, und dass der Kolben (18) ein dichtes Verschliessen der Patrone (12) gewährleistet, derart, dass der Kolben nach der Explosion gegen die Wirkung der elastischen Mittel (10) in Betätigungsstellung gehalten wird

## Claims

1. Valve equipped with actuation means consisting of an explosive cartridge (12) fired electrically, characterized in that it comprises a plug (8) held in an initial position by an elastic means (10) in that the explosive cartridge (12) is equipped with a piston (17, 18) directly actuating the plug and in that the piston (17, 18) provides leaktight closure of the cartridge (12), in such a way that the piston is held in actuated position after explosion, against the action of said elastic means.
